# EUROPEAN PATENT APPLICATION

(11) **EP 0 787 982 A1**
(43) Date of publication of application: **06.08.1997**
(21) Application number: 97300616.6
(22) Date of filing: 30.01.1997
(51) Int. Cl.: G01N 1/14

(54) **Liquid sampling**

(30) Priority: 03.02.1996 GB 9602278
(71) Applicant: Montec International Limited, Manchester M5 2DL (GB)
(72) Inventor: Kostanzer, Gerhard, 72379 Hechingen (DE); Wehrstein, Hartmut, 72116 Mössingen (DE)
(74) Representative: Every, David Aidan

(57) **Abstract**

A method and apparatus for obtaining a sample of a desired volume from a reservoir (1) of effluent in which a sampling chamber (2) is connected to the reservoir via a conduit (3). Suction pressure is applied to a sampling container such that effluent is drawn up from the reservoir (1) into the sampling container (2) via the liquid conduit (3). The supply of the fluid is terminated when the sampled liquid in the sampling container reaches a predetermined level. A calculation is performed to ascertain the time required for compressed air to be supplied at a predetermined pressure and flow rate to said sampling container so that sampled effluent in excess of said desired volume is discharged. The compressed air is then supplied to discharge the excess effluent.

## Description

The present invention relates to a method and apparatus for the sampling of a liquid particularly, but not exclusively, effluent. The invention is particularly concerned with the extraction of a sample from a source of liquid such as a transporting pipeline, a storage tank, stream, river or open channels.

One type of known liquid sampling apparatus comprises a fixed volume sampling chamber connected via a sampling tube to a reservoir of liquid to be sampled and connected to a source of pressurised air or other gas. By means of controlled operation of valves the pressurised air or gas is used to clear the sampling apparatus before suction is applied to the reservoir to draw liquid into the sampling chamber. When the sampling chamber is full, excess liquid above an end of the sampling tube in the chamber is returned to the reservoir or pipeline by passing pressurised gas or air through the sampling chamber. The pressurised air forces liquid in the sampling chamber out through the sampling tube and back into the reservoir. Expulsion of excess liquid is complete when the level of liquid in the sampling chamber falls below the height of the end of the sampling tube in the sampling chamber. The amount of liquid remaining in the sampling chamber is thus a known volume and is discharged to a removable sample container for analysis. The volume of sampled liquid may be varied by adjusting the height of the sampling tube end relative to the bottom of the sampling chamber. This adjustment is generally made under the control of a motor and associated mechanical transmission components. The disadvantage of this design is that the motor and associated mechanical transmission components add to the initial and maintenance cost of the apparatus.

According to a first aspect of the present invention there is provided a method for obtaining a liquid sample of a desired volume from a liquid source, the liquid source being selectively connectable to a sampling container via a liquid conduit, the method comprising the steps of:
(i) supplying a first volume of fluid to said sampling chamber or said liquid source to create a pressure differential between the two so that liquid is forced from said liquid source into the sampling container via the liquid conduit until the sampled liquid in the sampling container reaches a predetermined level;
(ii) calculating the time required for a second volume of fluid to be supplied at a predetermined pressure and flow rate to said sampling chamber so that sampled liquid in excess of said desired volume is discharged.
(iii) supplying said second volume of fluid to the sampling container for the calculated time at said predetermined pressure and flow rate so that sampled liquid in excess of the desired volume is discharged.

The first volume of fluid may be supplied to said sampling container at a pressure less than that at the liquid source.

Preferably the sampling container and the liquid conduit are vented to atmospheric pressure after the liquid in the sampling container has reached said predetermined level so that a volume of liquid in the sampling container above a predetermined maximum height of the liquid conduit relative to the sampling container is discharged from the sampling container. The remaining volume of liquid will therefore be a known amount set by the maximum height of the liquid conduit relative to the sampling container.

Preferably the volume of liquid discharged passes through said liquid conduit to the liquid source.

The sampled liquid in excess of the desired volume may also be discharged through said liquid conduit to the liquid source.

According to a second aspect of the present invention there is provided liquid sampling apparatus for obtaining a liquid sample of a desired volume from a liquid source, the apparatus comprising a sampling container connected to said liquid source via a liquid conduit, a source of fluid selectively connectable to said sampling container or said liquid source and deliverable at a predetermined pressure and flow rate to said sampling container, control means for selectively supplying a first volume of fluid to said sampling chamber or said liquid source to create a pressure differential between the two so that liquid is forced from said liquid source into the sampling container via the liquid conduit until the sampled liquid in the sampling container reaches a predetermined level, means for calculating the time required for a second volume of fluid to be supplied at said predetermined pressure and flow rate to said sampling container so that sampled liquid in excess of said desired volume is discharged, and a timer for controlling the supply of said second volume of fluid for the calculated time.

The sampling container may have a liquid level detector device to detect when liquid in the container has reached a predetermined level so that supply of said first volume of fluid can be terminated.

The liquid conduit preferably has a predetermined maximum height relative to the sampling container. Thus by venting the sampling container and the liquid conduit to atmosphere the volume of liquid in the sampling container above the predetermined maximum height of the liquid conduit is discharged. A valve may be provided in the liquid conduit for this purpose.

Preferably part of the liquid conduit extends downwardly into said sampling container.

It is an object of the present invention to obviate or mitigate the aforesaid disadvantage.

A specific embodiment of the present invention will now be described, by way of example only, with reference to the accompanying drawings in which:
Figure 1 is a diagrammatic representation of liquid sampling apparatus in accordance with the present invention;
Figure 2 is a sectioned view of a sampling chamber in accordance with the liquid sampling apparatus of figure 1;
Figures 3a-3e show diagrammatically the sequence of steps used in the sampling method of the present invention; and
Figure 4 is a valve timing diagram showing operation of the valves of the apparatus shown in figure 1.

Referring now to the drawings, a source of effluent in the form of a transportation pipeline, a storage tank, a river, a stream, an open channel or the like is indicated by reference numeral 1. The source 1 contains effluent which, it is to be understood, has the characteristics of a liquid although it may actually be a combination of liquid and particle solids

A sampling chamber 2 is connected to the reservoir 1 by means of a sampling tube 3 having an intake valve MV5 which is operable to vent the sampling tube 3 to atmosphere. The sampling tube 3 rises from the source 1 in a substantially vertical direction and then bends towards the horizontal before being connected to the sampling chamber 2.

The sampling chamber 2, shown in detail in figure 2, is constructed from a suitable corrosion and abrasive resistant material which meets safety provisions relating to the liquid to be sampled and is of generally cylindrical configuration with separable upper and lower parts 4, 5. The lower part 4 of the chamber 2 is relatively thin-walled with a tapered base 6 having an open neck 7. The lower part 4 of the sampling chamber 2 is sealingly connected to the upper part 5 of the chamber 2 with a clamping collar 8. The upper part 5 has relatively thick walls and supports a sample inlet port 9 in the form of a right-angled conduit inclined to the longitudinal axis of the sampling chamber 2. The sample inlet port 9 has a first portion 10 which projects from the sampling chamber 2 and is inclined at a small angle to the horizontal and a second portion 11 that depends approximately perpendicularly from the first portion 10. The second portion 11 extends downwardly towards the open neck 7 of the sampling chamber 2 but falls short of it by a predetermined distance. The first portion 10 of the inlet port 9 is connected at an end remote from the sampling chamber 2 to the sampling tube 3. The inlet port 9 is connected to a closeable vent 12 extending through a top wall 13 of the sampling chamber 2 via a small diameter bore 14 at the top of the first portion 10 of the sample inlet port 9.

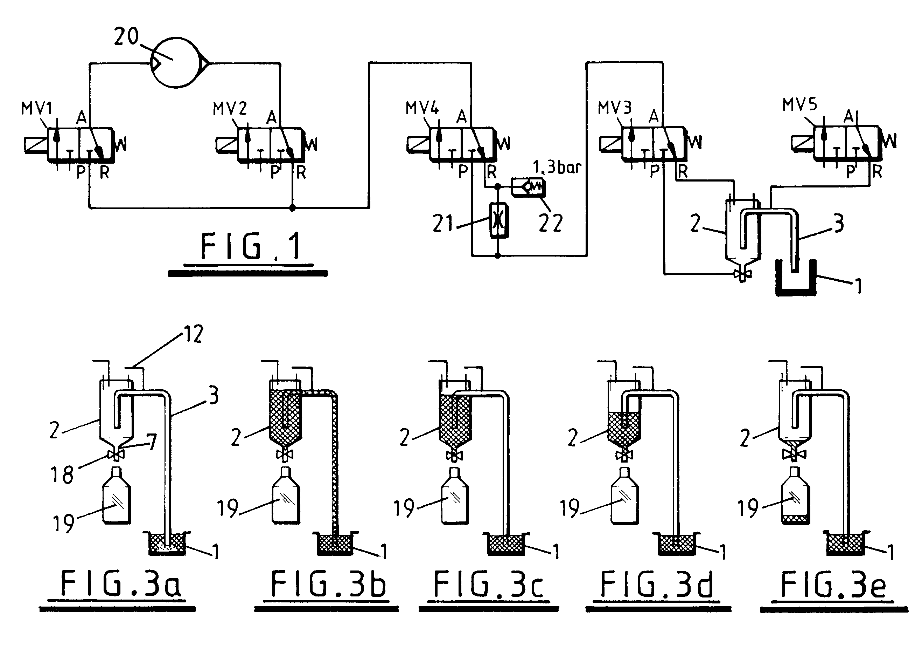

The top wall 13 of the sampling chamber 2 has a centrally mounted liquid-level detector 15 and a compressed air inlet port 16 which is connected to an air pump via control valves MV1, MV2, MV3 and MV4 (see figure 1) as described below. The open neck 7 of the sampling chamber 2 is connected to atmosphere via a length of flexible tubing 17 which is closeable by a pinch valve 18. At the opposite end of the flexible tubing 17 there is a removable sample bottle 19 (see figure 3).

In figure 1 all the valves MV1-5 are shown in the non-energised condition.

The pinch valve 18 and the opening of the air inlet part 16 are controlled by valve MV3. The supply of compressed air from a pump 20 to the sampling chamber is controlled by valve MV4 which can be operated to switch the air supply so that it is delivered directly to the sampling chamber 2 or so that is delivered via a throttle 21 with a pressure regulator 22. The characteristics of the throttle 21 are selected to provide the compressed air at a predetermined flow rate and the pressure regulator 22 operates to ensure delivery at a predetermined pressure.

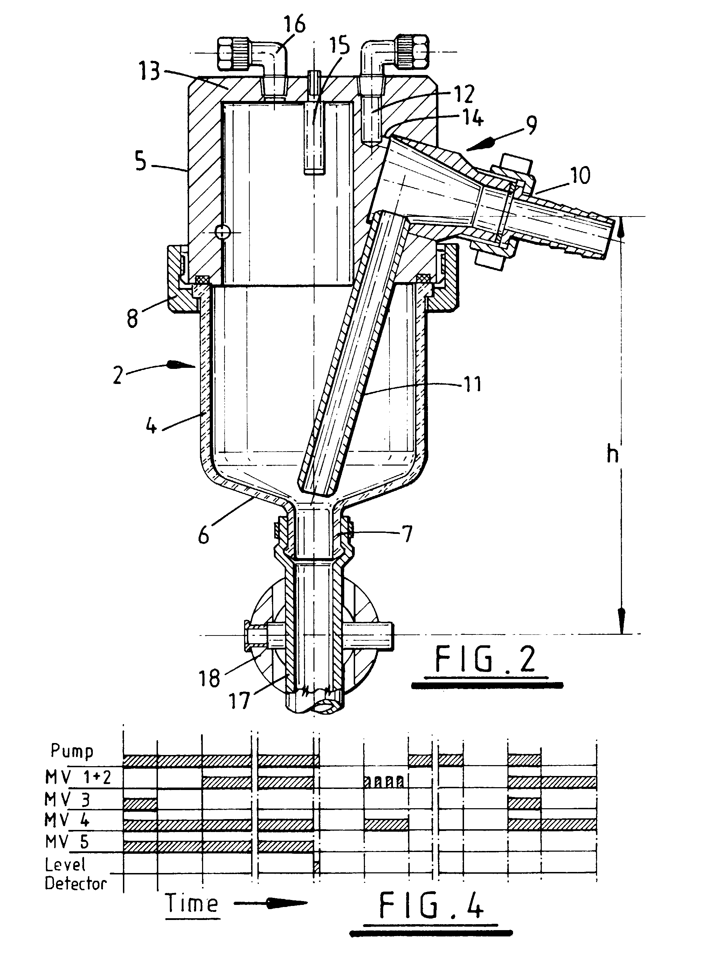

The operation of the apparatus will now be described with reference to figures 3a-3e and the valve timing diagrams of figure 4. Note that with valve MV3 in a non-energised configuration the air inlet port 16 of the sampling chamber 2 is open whereas the pinch valve 18 is closed and in an energised configuration the situation is reversed.

Valves MV1 and MV2 are operated together and control the pressure supply from the pump 20. With valves MV1 and MV2 in the non-energised condition (as shown in figure 1) the pump supplies compressed air whereas when the valves MV1 and MV2 are energised suction (negative) pressure is supplied.

Initially valves MV1 and MV2 are non-energised and MV3, 4, 5 are energised. The initial energising of MV3 closes the pinch valve 18 and shortly thereafter MV3 is switched so that the compressed air inlet 16 to the sampling chamber 2 is open. Compressed air is then supplied by the pump 20 and forced through the apparatus to clear it of remnant effluent or solid particles. Any such matter will be forced back to the source 1 (see figure 3a).

The sampling operation is commenced by energising valves MV1 and MV2 so that the pump 20 applies suction pressure to draw up effluent from the source via the sampling tube 3 into the sampling chamber 2 through the sample inlet port 9 (see figure 3b). When sampling chamber 2 is practically full the liquid level detector 15 is triggered and the pump 20 is switched off. All the valves MV1-MVS are then de-energised, valve MV5 being switched so that the vent on the inlet port is open to atmosphere. Air enters the sampling chamber 2 forcing effluent in the sampling tube 3 and the second portion 10 of the sample inlet port 9 above the maximum height of the sample inlet port 9 to drain back to the source 1 via the sampling tube 3 (see figure 3c). The volume of effluent remaining in the sampling chamber 2 will be known since the effluent in the sampling chamber 2 settles to a level coterminous with the maximum height of the sampling tube 3 or sample inlet port 9 relative to the sampling chamber 2. In the embodiment shown in figure 2 the maximum height is indicated by h measured from the nominal datum of the pinch valve.

After the level of effluent in the sample chamber has settled, valve MV4 is briefly energised and the status of valves MV 1 and MV2 is alternated in response to a pulsed control signal. This enables a partial vacuum present in the top of the sampling container to revert to the atmosphere pressure.

The pump 20 is then activated and valve MV4 is switched to the non-energised condition so that compressed air is supplied to the sampling chamber 2 through the throttle 21 (under control of the pressure regulator 22) at a known pressure and flow rate for a calculated period of time to discharge unwanted excess effluent so that a desired volume of sampled effluent remains. With the pressure, flow rate, start volume of liquid and desired final volume of effluent being known variables the time required to discharge the excess effluent can be calculated. With the sampling tube 3 open to the source 1 excess effluent is forced back into the source of effluent to leave the desired volume of effluent in the sampling chamber 2 (see figure 3d). Valves MV1, 2, MV3 and MV4 are then all energised so that the pinch valve 18 is opened and a desired volume of effluent is discharged into the sampling bottle 19 (see figure 3e). The bottle 19 may then be removed for analysis of the sample.

It will be appreciated that the method and apparatus of the present invention provide for a variable volume a liquid sampler without the need for movement of the sampling conduit or sample inlet port. Once a desired sample volume has been selected calculations are performed to ascertain the time required for compressed air to be applied to the effluent and discharge it from the sampling chamber in order that the selected volume is left.

It will be appreciated that numerous modifications to the above described design and method may be made without departing from the scope of the invention as defined in the appended claims. For example, instead of suction pressure being applied to sampling container 2 in order to draw up a sample of effluent from the source 1, excess pressure may be applied to the source 1 so that effluent is forced into sampling container 2.

## Claims

1. A method for obtaining a liquid sample of a desired volume from a liquid source, the reservoir being selectively connectable to a sampling container via a liquid conduit, the method comprising the steps of:
(i) supplying a first volume of fluid to said sampling container or said liquid source to create a pressure differential between the two so that liquid is forced from said liquid source into the sampling container via the liquid conduit until the sampled liquid in the sampling container reaches a predetermined level;
(ii) calculating the time required for a second volume of fluid to be supplied at a predetermined pressure and flow rate to said sampling container so that sampled liquid in excess of said desired volume is discharged.
(iii) supplying said second volume of fluid to the sampling container for the calculated time at said predetermined pressure and flow rate so that sampled liquid in excess of the desired volume is discharged.

2. A method for obtaining a liquid sample according to claim 1, wherein said first volume of fluid is supplied to said sampling container at a pressure less than that at the liquid source.

3. A method for obtaining a liquid sample according to claim 1 or 2, further comprising the step of venting the sampling container and the liquid conduit to atmospheric pressure after the liquid in the sampling container has reached said predetermined level so that a volume of liquid in the sampling container above a predetermined maximum height of the liquid conduit relative to the sampling container is discharged from the sampling container.

4. A method according to claim 3, wherein said volume of liquid is discharged via said liquid conduit to the liquid source.

5. A method according to any preceding claim, wherein the sampled liquid in excess of the desired volume is discharged through said liquid conduit to the liquid source.

6. Liquid sampling apparatus for obtaining a liquid sample of a desired volume from a liquid source, the apparatus comprising a sampling container connected to said liquid source via a liquid conduit, a source of fluid selectively connectable to said sampling container or to said liquid source and deliverable at a predetermined pressure and flow rate to said sampling container, control means for selectively supplying a first volume of fluid to said sampling container or to said liquid source to create a pressure differential between the two so that liquid is forced from said liquid source into the sampling container via the liquid conduit until the sampled liquid in the sampling container reaches a predetermined level, means for calculating the time required for a second volume of fluid to be supplied at said predetermined pressure and flow rate to said sampling container so that sampled liquid in excess of said desired volume is discharged, and a timer for controlling the supply of said second volume of fluid for the calculated time.

7. Liquid sampling apparatus according to claim 6, wherein the sampling container has a liquid level detector device to detect when liquid in the container has reached a predetermined level.

8. Liquid sampling apparatus according to claim 6 or 7, wherein the liquid conduit has a predetermined maximum height relative to the sampling container.

9. Liquid sampling apparatus according to claim 6, 7 or 8, wherein the liquid conduit has a valve by which it is selectively connectable to atmosphere to allow a volume of liquid in the sampling container above the predetermined maximum height of the liquid conduit to be discharged.

10. Liquid sampling apparatus according to any one of claims 6 to 9, wherein part of the liquid conduit extends downwardly into said sampling container.

11. A method for obtaining a liquid sample of desired volume from a liquid source substantially as hereinbefore described with reference to the accompanying drawings.

12. Liquid sampling apparatus substantially as hereinbefore described with reference to the accompanying drawings.
